# EUROPÄISCHE PATENTANMELDUNG

(11) **EP 1 607 305 A2**
(43) Veröffentlichungstag der Anmeldung: **21.12.2005**
(21) Anmeldenummer: 05012926.1
(22) Anmeldetag: 15.06.2005
(51) Int. Cl.: B62D 5/065

(54) **Druckmittelbetätigte Stelleinrichtung, insbesondere für eine Fahrzeuglenkvorrichtung**

(30) Priorität: 18.06.2004 DE 102004029409
(71) Anmelder: Jungheinrich Aktiengesellschaft, 22047 Hamburg (DE)
(72) Erfinder: Bögelein, Rolf, 74564 Crailsheim (DE)
(74) Vertreter: Tiesmeyer, Johannes

(57) **Zusammenfassung**

Eine druckmittelbetätigte Stelleinrichtung, insbesondere für eine Fahrzeuglenkvorrichtung, umfasst einen doppeltwirkenden Aktuator (12) mit zwei im Wesentlichen entgegengesetzt wirkenden Wirkbereichen (24, 26), wobei an jeden Wirkbereich (24, 26) je eine Druckmittelleitungsstrecke (28, 30) angeschlossen ist, durch welche den Wirkbereichen (24, 26) ein Druckmittel zuführbar beziehungsweise aus diesen (24, 26) abführbar ist, und wobei jede dem Aktuator (12) Druckmittel zuführende Druckmittelleitungsstrecke (28, 30) mit einer Druckmittelpumpe (14) verbunden ist, welche mit einem Pumpenantrieb (16) gekoppelt ist, durch den die wenigstens eine Druckmittelpumpe (14) zur Förderung von Druckmittel antreibbar ist. Erfindungsgemäß ist der Pumpenantrieb (16) derart ausgebildet, dass die Menge des von der Druckmittelpumpe (14) pro Zeiteinheit geförderten Druckmittels veränderbar und seine Förderrichtung (I, II) umkehrbar ist.

## Beschreibung

Die vorliegende Erfindung betrifft eine druckmittelbetätigte Stelleinrichtung, insbesondere für eine Fahrzeuglenkvorrichtung, umfassend einen doppeltwirkenden Aktuator mit zwei im Wesentlichen entgegengesetzt wirkenden Wirkbereichen, wobei an jeden Wirkbereich je eine Druckmittelleitungsstrecke angeschlossen ist, durch welche den Wirkbereichen ein Druckmittel zuführbar beziehungsweise aus diesen abführbar ist, und wobei jede dem Aktuator Druckmittel zuführende Druckmittelleitungsstrecke mit einer Druckmittelpumpe verbunden ist, welche mit einem Pumpenantrieb gekoppelt ist, durch den die wenigstens eine Druckmittelpumpe zur Förderung von Druckmittel antreibbar ist.

Als solche druckmittelbetätigte Stelleinrichtungen sind elektrohydraulische Stelleinrichtungen in sogenannten Lenkservostaten oder Lenkorbitolen bekannt. Dabei ist eine Hydraulikpumpe durch ein 3-Stellungs/2-WegeVentil wahlweise mit einem von zwei Wirkbereichen des doppelt wirkenden Aktuators verbindbar oder vollständig von diesem trennbar. Die Hydraulikpumpe wird vom Pumpenantrieb konstant mit hoher Leistung angetrieben. In Abhängigkeit der gewählten Stellung des 3-Stellungs/2-Wege-Ventils ist eine bei den bekannten Lenkservostaten vorhandene Hydraulikpumpe mit einem von zwei Wirkbereichen des Aktuators zur Zufuhr von Hydraulikflüssigkeit verbunden, während der jeweils andere Wirkbereich zur Abfuhr von Hydraulikflüssigkeit aus diesem mit einem Hydraulikflüssigkeitstank verbunden ist, oder die Hydraulikleitungsstrecken zu beiden Wirkbereichen sind versperrt, während die Hydraulikpumpe Hydraulikflüssigkeit lediglich im Kurzschlussbetrieb aus dem Hydraulikflüssigkeitstank entnimmt und in diesen zurückpumpt.

Nachteilig an der bekannten Stelleinrichtung ist, dass zum einen die Druckmittelpumpe dauerhaft mit hoher Last betrieben wird, was sich nachteilig sowohl auf den Energieverbrauch als auch auf die nutzbare Standzeit von Druckmittelpumpe und Pumpenantrieb auswirkt. Darüber hinaus muss das 3-Stellungs/2-Wege-Ventil in Abhängigkeit von einer Lenkbetätigung verstellt werden, was einen zusätzlichen Abstimmungsaufwand und eine zusätzliche potenzielle Fehlerquelle darstellt.

Ein weiterer Nachteil der bekannten Stelleinrichtung liegt darin, dass lediglich eine Verstellung des Aktuators mit im Wesentlichen stets der gleichen Verstellgeschwindigkeit möglich ist. Es kann jedoch gewünscht sein, den Aktuator mit unterschiedlichen Verstellgeschwindigkeiten zu verstellen.

Es ist daher eine Aufgabe der vorliegenden Erfindung, allgemein eine druckmittelbetätigte Stelleinrichtung der eingangs genannten Art anzugeben, welche mit einfachen Mitteln und einfachem Aufbau eine sichere und zuverlässige Verstellung des Aktuators ermöglicht. Die erfindungsgemäße Stelleinrichtung soll darüber hinaus eine hohe nutzbare Standzeit aufweisen.

Es ist eine weitere Aufgabe der vorliegenden Erfindung, ein Stelleinrichtung der eingangs genannten Art anzugeben, bei welcher der Aktuator mit unterschiedlichen Geschwindigkeiten verstellbar ist.

Die oben genannten Aufgaben werden allgemein gelöst durch eine gattungsgemäße Stelleinrichtung, bei welcher der Pumpenantrieb derart ausgebildet ist, dass die Menge des von der Druckmittelpumpe pro Zeiteinheit geförderten Druckmittels veränderbar und seine Förderrichtung umkehrbar ist.

Bei der erfindungsgemäß ausgestalteten Stelleinrichtung kann durch die Veränderbarkeit des von der Druckmittelpumpe pro Zeiteinheit geförderten Druckmittels die Verstellgeschwindigkeit des Aktuators verändert werden, da dieser langsamer oder schneller mit Druckmittel beaufschlagt werden kann.

Durch die Umkehrbarkeit der Förderrichtung der Druckmittelpumpe kann jedem Wirkbereich des Aktuators gezielt Druckmittel zugeführt oder entnommen werden, sodass eine gezielte Verstellung des Aktuators in seine zwei Verstellrichtungen ausführbar ist. Bei Nichtbetätigung der Pumpe wird das gerade vorherrschende Druckniveau in den Wirkbereichen beibehalten und der Aktuator somit in seiner augenblicklichen Stellung festgelegt. Ein in Abhängigkeit von einer Befehlseingabe, wie etwa einer Lenkbetätigung, zu schaltendes Ventil, wie das 3-Stellungs/2-Wege-Ventil des Standes der Technik, ist bei der erfindungsgemäßen Stelleinrichtung nicht mehr notwendig, daher ist ihr Aufbau vereinfacht.

Darüber hinaus wird der Pumpenantrieb nur noch dann betrieben, wenn eine tatsächliche Verstellung des Aktuators erfolgt. Ein Leerlauf oder hydraulischer Kurzschluss wie im Stand der Technik wird damit vermieden. Dadurch ist die nutzbare Standzeit der erfindungsgemäßen Stelleinrichtung erhöht.

Unter "nutzbarer Standzeit" soll im Sinne der vorliegenden Anmeldung derjenige Anteil der Standzeit verstanden sein, welcher tatsächlich für eine Betätigung der Stelleinrichtung genutzt wird. Mit "Standzeit" ist die Nettobetriebszeit der Druckmittelpumpe und des Pumpenantriebs bezeichnet, d.h. die Zeit, in welcher der Pumpenantrieb die Druckmittelpumpe antreibt, bis die Druckmittelpumpe oder der Pumpenantrieb versagt.

Wenn in dieser Anmeldung gesagt ist, dass eine dem Aktuator Druckmittel zuführende Druckmittelleitungsstrecke mit einer Druckmittelpumpe verbunden ist, so bedeutet dies, dass von der Druckmittelpumpe stets Druckmittel dem Aktuator theoretisch zuführbar ist.

Auch wenn die erfindungsgemäße druckmittelbetätigte Stelleinrichtung im Wesentlichen für eine Anwendung als hydraulische Stelleinrichtung einer Fahrzeuglenkvorrichtung vorgesehen ist, soll dennoch nicht ausgeschlossen sein, dass die Stelleinrichtung auch an anderer Stelle zum Einsatz kommt, etwa zur Höhenverstellung eines Lastenhubgeräts eines Flurförderfahrzeugs, sei es zur Höhenverstellung etwa einer Hubgabel bezüglich eines diese tragenden Hubgabelträgers oder sei es zur Relativverstellung zweier Elemente eines Hubgabelträgers zueinander, insbesondere im Falle eines teleskopartigen Hubgabelträgers.

Grundsätzlich sind als Druckmittelpumpe beliebige Pumpen verwendbar. Ebenso sind verschiedene Arten von Pumpenantrieben denkbar. Bevorzugt ist die Druckmittelpumpe jedoch eine rotierende Pumpe, da diese kontinuierlich fördern kann. In einem solchen Fall ist der die Druckmittelpumpe antreibende Pumpenantrieb bevorzugt ein drehzahlveränderlicher und drehrichtungsumkehrbarer Drehantrieb, vorzugsweise ein Elektromotor, welcher wesentlich einfacher in seiner Drehzahl verändert und in seiner Drehrichtung umgekehrt werden kann, als beispielsweise ein grundsätzlich ebenfalls als Pumpenantrieb denkbarer Verbrennungsmotor.

Weiterhin ist grundsätzlich denkbar, dass jedem der zwei Wirkbereiche eine eigene Druckmittelpumpe zugeordnet ist, welche diesem jeweils Druckmittel zuführt oder entnimmt. Dies führt jedoch zu einem weniger vorteilhaften großen Bauvolumen, Gewicht und hohen Herstellkosten. Um diese Nachteile zu vermeiden, ist die druckmittelbetätigte Stelleinrichtung bevorzugt derart aufgebaut, dass sie genau eine Druckmittelpumpe umfasst, welche zur Förderung von Druckmittel in zwei Richtungen ausgebildet ist, wobei die Druckmittelpumpe über eine erste Druckmittelleitungsstrecke mit einem ersten Wirkbereich des Aktuators und über eine zweite Druckmittelleitungsstrecke mit einem zweiten Wirkbereich des Aktuators verbunden ist.

Mit "Wirkbereich" des Aktuators ist ein Bereich des Aktuators bezeichnet, in welchem die Druckkraft von Druckmittel in eine Bewegung eines Stellorgans des Aktuators umgesetzt wird oder umsetzbar ist.

An den Anschlussstellen von Druckmittelleitungen zu Geräten, wie etwa dem Aktuator oder der Druckmittelpumpe, sind zwar Dichtungen vorgesehen. Jedoch ist nie ganz auszuschließen, dass nicht geringe Mengen an Druckmittel mit der Zeit aus einer Druckmittelleitungsanordnung entweichen. Selbst durch das Druckmittelleitungsmaterial kann im Wege der Diffusion ein Schwund an Druckmittel entstehen. Damit ein derartiger Druckmittelschwund nicht den Betrieb der Stelleinrichtung gefährden kann, ist gemäß einer Weiterbildung der vorliegenden Erfindung vorgesehen, dass eine mit dem Aktuator in Druckmittelübertragungsverbindung stehende Druckmittelleitungsanordnung, vorzugsweise jeweils die erste und die zweite Druckmittelleitungsstrecke, über wenigstens eine Druckmittelentnahmestrecke mit einem Druckmittelreservoir verbunden ist, insbesondere unter Zwischenanordnung wenigstens eines Saugventils, vorzugsweise eines Saugventils in jeder Druckmittelentnahmestrecke, welches Saugventil eine Druckmittelströmung aus dem Druckmittelreservoir gestattet und eine Druckmittelströmung in das Druckmittelreservoir sperrt.

Das Saugventil dient dazu, einen pneumatischen oder hydraulischen Kurzschluss mit dem Druckmittelreservoir und einen damit einhergehenden unerwünschten Druckverlust in der Druckmittelleitungsanordnung zu verhindern.

Wie bereits eingangs angedeutet wurde, kann der Aktuator in einer erreichten Stellung gehalten werden, indem die Pumpe angehalten wird. Dies kann für kleine Lasten im Aktuator oder für Fälle ausreichend sein, bei welchen eine Krafteinwirkung auf den Aktuator von außen ausgeschlossen ist. Bei größeren von außen auf den Aktuator einwirkenden Kräften jedoch kann unter Umständen eine Rückwirkung auf die Druckmittelpumpe nicht ausgeschlossen werden, sodass die Pumpe im Schubbetrieb durch den Aktuator angetrieben wird, was wiederum eine unerwünschte Verstellung des Aktuators gestattet. Dem kann entgegengewirkt werden, indem der Pumpenantrieb oder/und die Druckmittelpumpe mit einer selbsteinfallenden Bremse oder mit einer in eine Bremsstellung vorgespannten Antriebsbremse versehen ist. Die Bremse kann vorteilhaft derart ausgestaltet sein, dass sie bei Betätigung des Pumpenantriebs gelöst wird, etwa durch eine gesonderte Lösevorrichtung.

Es können grundsätzlich für die Druckmittelzufuhr zum als auch für die Druckmittelabfuhr vom Aktuator jeweils eine gesonderte Druckmittelleitungsstrecke vorgesehen sein. Um jedoch eine komplizierte Leitungsführung und eine unnötig komplizierte Montage zu verhindern, sind bevorzugt die erste und die zweite Druckmittelleitungsstrecke sowohl zur Druckmittelzufuhr als auch zur Druckmittelabfuhr ausgebildet.

Alternativ oder zusätzlich zur oben genannten mechanischen Sperrung des Pumpenantriebs oder/und der Druckmittelpumpe kann der Aktuator sehr einfach und effektiv dadurch in einer gewünschten Stellung festgelegt werden, dass in einer Druckmittelleitungsstrecke zwischen der Druckmittelpumpe und dem zugeordneten Wirkbereich des Aktuators ein Lasthalteventil vorgesehenen ist, welches schaltbar ist zwischen einer Normalstellung, in der es eine Druckmittelströmung in Richtung zum Aktuator gestattet und in der entgegengesetzten Richtung sperrt, und einer Lastabbaustellung, in der es eine Druckmittelströmung in Richtung vom Aktuator weg gestattet. Durch das Vorsehen eines derartigen Lasthalteventils kann zwar Druckmittel zum Aktuator zugeführt, jedoch nicht ohne Weiteres von diesem abgeführt werden, sodass eine Verstellung des Aktuators entgegen dem Wirkbereich, in dessen zugeordneter Druckmittelleitungsstrecke das Lasthalteventil vorgesehen ist, nicht möglich ist. Eine derartige Verstellung ist erst nach einem Schalten des Lasthalteventils von der Normalstellung in die Lastabbaustellung möglich.

Für eine erhöhte Betriebssicherheit ist es vorteilhaft, wenn das Lasthalteventil in die Normalstellung vorgespannt ist, da dann eine unerwünschte Verstellung des Aktuators durch eine von außen auf ihn einwirkende unkontrollierbare Last oder Kraft erschwert oder gar ausgeschlossen ist.

Besonders bevorzugt ist in sowohl der ersten als auch der zweiten Druckmittelleitungsstrecke ein Lasthalteventil vorgesehen, sodass der Aktuator in beide Verstellrichtungen festgelegt ist. Es kann jedoch auch gewünscht sein, den Aktuator nur in einer Verstellrichtung festzulegen, etwa dann, wenn die Stelleinrichtung als Hubstelleinrichtung zum Heben von Lasten eingesetzt wird. In diesem Falle kann erwünscht sein, dass ein Heben stets möglich sein soll, der Aktuator jedoch in Lastabsenkerichtung durch ein Lasthalteventil gesichert ist.

Dabei kann in einfacher Weise die notwendige Verstellung des einen Lasthalteventils von der Normalstellung in die Lastabbaustellung in Abhängigkeit von einem Druck des Druckmittels erfolgen, welcher in der Druckmittelleitungsstrecke mit dem jeweils anderen Lasthalteventil herrscht. Somit kann eine Steuerung des Lasthalteventils vermieden werden, da die Lasthalteventile selbststeuernd eingebaut sind. Wird einem Wirkbereich Druckmittel zugeführt, steigt in der zugeordneten Druckmittelleitungsstrecke der Druck an. Dieser erhöhte Druck in der einen Druckmittelleitungsstrecke dient als Steuerdruck, um das Lasthalteventil der jeweils anderen Druckmittelleitungsstrecke in die Lastabbaustellung zu verstellen und dadurch einen Druckmittelabfluss aus dem jeweils anderen Wirkbereich zu ermöglichen. Vorzugsweise wird der Druck in Strömungsrichtung zum Aktuator hin vor dem jeweils anderen Lasthalteventil als Steuerdruck verwendet, da dieser Abschnitt der Druckmittelleitungsstrecke in der Regel mit einem niedrigeren Druck beaufschlagt ist als der Abschnitt zwischen Lasthalteventil und Wirkbereich.

Die Stelleinrichtung kann gemäß einer bevorzugten Weiterbildung der Erfindung mit einer Regeleinrichtung zusammenwirken, welche den Pumpenantrieb derart ansteuert, dass der Aktuator von einer Iststellung solange zu einer Sollstellung hin verstellt wird, bis Ist- und Sollstellung im Wesentlichen übereinstimmen. Dabei kann jedoch ein Überschwingen auftreten, sodass der Aktuator mit sehr hohem Regelaufwand von einer über die eigentliche Sollstellung hinaus verstellten Position in entgegengesetzter Richtung zur Sollstellung hin zurückverstellt wird. Auch bei dieser Korrekturbewegung kann wiederum ein Überschwingen auftreten, sodass die Sollstellung des Aktuators erst allmählich und nach hohem Betätigungsaufwand der Stelleinrichtung erreicht wird.

Ein derartiger Betätigungsaufwand und die zum Einregeln der Sollstellung des Aktuators benötigte Zeit kann dadurch verkürzt werden, dass in einer, vorzugsweise in jeder zur Abfuhr von Druckmittel aus einem Wirkbereich des Aktuators ausgebildeten Druckmittelleitungsstrecke eine Gegendruckventilanordnung vorgesehenen ist, welche eine Druckmittelströmung in Richtung vom Aktuator weg bis zu einem vorbestimmten Freigabedruck des Druckmittels sperrt und bei einem diesen übersteigenden Druck des Druckmittels eine Druckmittelströmung in Richtung vom Aktuator weg gestattet. Diese Ausgestaltung gewährleistet, dass der Aktuator stets gegen den vorbestimmten Freigabedruck als Mindestdruck verstellt werden muss, sodass ein Überschwingen des Aktuators über seine Sollstellung hinaus vermieden oder zumindest im Ausmaß stark reduziert wird.

Im Falle, dass die erste und die zweite Druckmittelleitungsstrecke sowohl zur Druckmittelzufuhr als auch zur Druckmittelabfuhr ausgebildet sind, sollte die Gegendruckventilanordnung in der bevorzugten Weiterbildung der Erfindung eine Druckmittelströmung in Richtung zum Aktuator gestatten. Dies kann in konstruktiver Ausgestaltung der Gegendruckventilanordnung durch ein Rückschlagventil und ein parallel dazu geschaltetes Zuschaltventil erreicht werden. Vorzugsweise wird ein Zuschaltventil mit einstellbarer Gegenkraft gewählt, sodass der Freigabedruck frei vorbestimmbar ist. Als Zuschaltventil wird ein Ventil verstanden, welches gegen eine voreingestellte oder einstellbare äußere Kraft, in der Regel eine Federkraft, einen Ventilausgang freigibt.

Bei einer druckmittelbetätigten Stelleinrichtung ist der Fall denkbar, dass der Aktuator zwar verstellt werden soll, aber aufgrund eines körperlichen Hindernisses nicht verstellt werden kann. Als Folge davon würde der Druck auf der Seite des Wirkbereichs, dem Druckmittel zugeführt werden soll, stark ansteigen. Um einen derartigen übermäßigen Druckanstieg vermeiden zu können, kann wenigstens ein Druckbegrenzungsventil vorgesehen sein, welches dazu ausgebildet ist, den Druck in einer ihm zugeordneten Druckmittelleitungsstrecke, vorzugsweise in jeder Druckmittelleitungsstrecke, auf einen vorbestimmten Druckmittel-Grenzdruck zu begrenzen.

Gemäß einer einfachen, aber effektiven konstruktiven Ausgestaltung kann der Druck in einer, vorzugsweise in jeder Druckmittelleitungsstrecke dadurch begrenzt werden, dass das Druckbegrenzungsventil eine Druckmittelströmung aus der ihm zugeordneten Druckmittelleitungsstrecke hinaus gestattet. In diesem Falle wird einfach Druckmittel aus der durch Überdruck gefährdeten Druckmittelleitungsstrecke abgeführt und dadurch der Druck abgesenkt. Hierzu kann das Druckbegrenzungsventil derart ausgestaltet sein, dass es eine Druckmittelablassleitung öffnet, wenn der Druck des Druckmittels in der ihm zugeordneten Druckmittelleitungsstrecke den vorbestimmten Druckmittel-Grenzdruck übersteigt.

Wie zuvor durch die bevorzugte Ausgestaltung mit lediglich genau einer Druckmittelpumpe angedeutet wurde, wird bevorzugt Druckmittel in einem geschlossenen System zwischen den Wirkbereichen des Aktuators umgepumpt. Dieses geschlossene System mit besonders geringem Druckmittelverlust kann auch mit wenigstens einem Druckbegrenzungsventil beibehalten werden, und zwar dann, wenn das wenigstens eine Druckbegrenzungsventil in einer die erste und die zweite Druckmittelleitungsstrecke verbindenden Druckmittelverbindungsleitung angeordnet ist. In diesem Falle führt ein Öffnen eines Druckbegrenzungsventils aufgrund übermäßigen Drucks in der ihm zugeordneten Druckmittelleitungsstrecke zur Öffnung einer Verbindung zu der jeweils anderen Druckmittelleitungsstrecke und damit zu einem pneumatischen oder hydraulischen Kurzschluss, was den Druck in der Druckmittelleitungsanordnung stark absenken lässt. In einer bevorzugten Weiterbildung der Erfindung werden vorteilhaft beide Druckmittelleitungsstrecken, die erste und die zweite, in gleicher Weise gegen einen Überdruck geschützt, indem je ein der ersten und ein der zweiten Druckmittelleitungsstrecke zugeordnetes Druckbegrenzungsventil vorgesehen ist, wobei jedes Druckbegrenzungsventil eine Druckmittelströmung von der einen Druckmittelleitungsstrecke weg zur jeweils anderen Druckmittelleitungsstrecke dann gestattet, wenn der Druck des Druckmittels in der jeweiligen Druckmittelleitungsstrecke den vorbestimmten Druckmittel-Grenzdruck übersteigt.

In konstruktiver Ausgestaltung kann das wenigstens eine Druckbegrenzungsventil ein Zuschaltventil sein, das die Arten an in der druckmittelbetätigten Stelleinrichtung der vorliegenden Erfindung benutzten Ventilen gering hält. Somit kann auch weniger geschultes oder erfahrenes Personal für Wartung und Reparatur eingesetzt oder geschult werden. Um die Druckbegrenzung auf die jeweils vorhandenen Druckmittelleitungsstrecken anpassen zu können, kann vorzugsweise ein Zuschaltventil mit einstellbarer Gegenkraft verwendet werden.

Um die Pumpe nach einem Verstellen des Aktuators von dem von ihr in einer Druckmittelleitungsstrecke aufgebauten Druck entlasten zu können, kann wenigstens eine Druckmittelleitungsstrecke, vorzugsweise alle Druckmittelleitungsstrecken, über eine Drossel mit einem Druckmittelreservoir verbunden sein. Hierdurch wird die Lebensdauer der Pumpe aufgrund der verringerten, dauerhaft auf sie wirkenden Belastung erhöht.

Der Aktuator kann ein Kolben-Zylinder-System sein mit zwei einander bezüglich des Kolbens als Stellorgan gegenüberliegenden Zylinderräumen, von denen jeder Zylinderraum einen Wirkbereich bildet. Sollte stattdessen ein kontinuierlich verstellbarer Aktuator gewünscht sein, kann ein zur Drehbewegung antreibbarer Aktuator, etwa ein hydraulischer Motor, zum Einsatz kommen. In einem solchen Falle bewirkt eine Druckmittelzufuhr zum einen Wirkbereich eine Drehung der Aktuatorenwelle im Uhrzeigersinn und eine Druckmittelzufuhr zum jeweils anderen Wirkbereich eine Drehung im Gegenuhrzeigersinn.

Das Druckmittel der Stelleinrichtung kann ein Gas oder eine Flüssigkeit sein. Bevorzugt ist es eine Hydraulikflüssigkeit, da mit dieser zum einen größere Lasten durch den Aktuator verstellt werden können und außerdem der Aktuator schneller auf eine Druckänderung durch die Pumpe anspricht.

Wie bereits angedeutet wurde, kann die druckmittelbetätigte Stelleinrichtung der vorliegenden Erfindung für verschiedene Aufgaben eingesetzt werden. Bevorzugt wird sie jedoch bei einer Lenkvorrichtung mit einer um eine Lenkachse schwenkbaren Radaufnahme und mit einer eine Lenkkraft zur Radaufnahme übertragenen Kraftübertragungseinrichtung eingesetzt, wobei die Kraftübertragungseinrichtung derart ausgebildet ist, dass sie eine vom Aktuator der Stelleinrichtung ausgegebene Kraft zur Radaufnahme überträgt, um diese um die Lenkachse zu verschwenken. Für eine solche Lenkvorrichtung wird unabhängiger Schutz angestrebt.

Da auch Lasthebe- und -senkaufgaben mit der erfindungsgemäßen Stellvorrichtung erledigt werden können, ist diese Stelleinrichtung bevorzugt in ein Flurförderfahrzeug eingebaut, besonders bevorzugt in einen Stapler. Ein derartiges Flurförderfahrzeug erhält durch die erfindungsgemäße Stelleinrichtung einen eigenen Wert, sodass auch hierfür unabhängiger Schutz angestrebt wird. Gleiches gilt für die oben genannte Lenkvorrichtung.

Der Aufbau des Flurförderfahrzeugs kann vor allem im Bereich der Lenkung wesentlich vereinfacht werden, wenn es eine Lenkvorrichtung mit einer Stelleinrichtung der vorliegenden Erfindung aufweist. Dabei kann die Lenkung vollständig nach dem Prinzip "steer by wire" realisiert sein, d.h. ein Lenkmittel, wie etwa ein Lenkrad, Lenkknüppel oder Lenkhorn und dgl., dient lediglich als Eingabemittel, um einer Lenkregelvorrichtung eine gewünschte Richtungsänderung des Flurförderfahrzeugs einzugeben. Mit wenigstens einem Lenkwinkelsensor wird wenigstens eine Größe erfasst, die die momentane Lenkwinkelstellung wenigstens eines lenkbaren Rads repräsentiert. Diese Größe kann beispielsweise ein Winkel sein, welcher zwischen einer zur Radachse des lenkbaren Rads orthogonalen Ebene und einer in Flurförderfahrzeuglängsrichtung und orthogonal zur Fahrbahn verlaufenden Fahrzeuglängsmittelebene eingeschlossen ist. Weiterhin wird mit wenigstens einem Lenkmittelsensor wenigstens eine Lenkgröße erfasst, die eine Betätigung des Lenkmittels repräsentiert. Im Falle eines Lenkrads kann dies beispielsweise der Einschlagwinkel des Lenkrads oder/und die Einschlaggeschwindigkeit des Lenkrads und dgl. sein. Bei anderen Lenkmitteln werden entsprechende Größen erfasst.

Die am Flurförderfahrzeug vorgesehene Lenkregelvorrichtung ist weiterhin dazu ausgebildet, ausgehend von der erfassten Lenkgröße eine Lenksollgröße zu ermitteln, welche eine gewünschte Lenkwinkelstellung (Soll-Lenkwinkelstellung) des wenigstens eines lenkbaren Rades repräsentiert. Schließlich ist die Lenkregelvorrichtung derart ausgebildet, dass sie den Pumpenantrieb derart ansteuert, dass das wenigstens eine lenkbare Rad ausgehend von seiner momentanen Lenkwinkelstellung in Richtung zu der gewünschten Lenkwinkelstellung verschwenkt wird. Das Verschwenken dauert an, bis die gewünschte Lenkwinkelstellung erreicht ist.

Die vorliegende Erfindung wird anhand der beiliegenden Figur nähert erläutert werden.

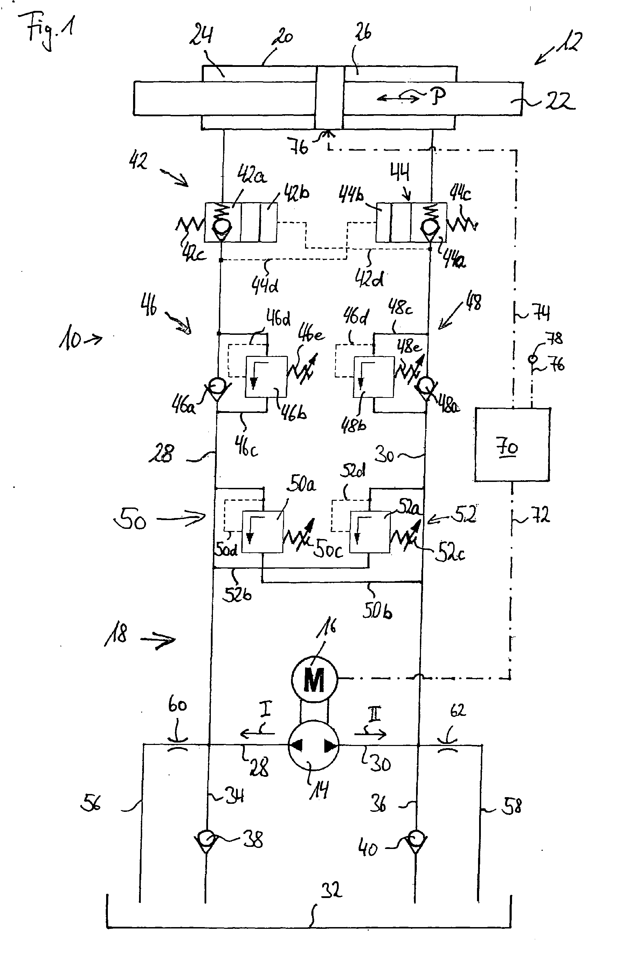

Die beiliegende Figur (Figur 1) stellt eine bevorzugte Ausführungsform der erfindungsgemäßen druckmittelbetätigten Stelleinrichtung dar.

In Figur 1 ist eine erfindungsgemäße Stelleinrichtung allgemein mit 10 bezeichnet. Die Stelleinrichtung 10 umfasst einen doppelt wirkenden Aktuator 12 in Form einer Kolben-Zylinder-Einheit, eine Hydraulikpumpe 14, einen mit der Hydraulikpumpe 14 verbundenen Elektromotor 16 sowie eine die Pumpe 14 mit dem Aktuator 12 verbindende Hydraulikleitungsanordnung 18.

Der Elektromotor 16 ist in seiner Drehzahl veränderlich und in seiner Drehrichtung umkehrbar. Dementsprechend kann die von ihm angetriebene Hydraulikpumpe 14 Hydraulikflüssigkeit in beide durch die Pfeile I und 11 gekennzeichneten Richtungen mit unterschiedlicher zur Drehzahl des Motors 14 im Wesentlichen proportionaler Strömungsgeschwindigkeit fördern.

Der Aktuator 12 umfasst einen Zylinder 20 und einen darin in Richtung des Doppelpfeils P verschiebbar aufgenommenen Kolben 22. Der Aktuator 12 verfügt über einen ersten Wirkbereich 24, welcher bei Zufuhr von Hydraulikflüssigkeit in diesen eine Verschiebung des Kolbens 22 in Figur 1 nach rechts bewirkt, und einen zweiten Wirkbereich 26, welcher bei Zufuhr von Hydraulikflüssigkeit in diesen eine Bewegung des Kolbens 22 in Figur 1 nach links bewirkt. Der erste Wirkbereich 24 ist mit der Pumpe 14 durch eine erste Hydraulikleitungsstrecke 28 verbunden. Der zweite Wirkbereich 26 ist mit der Hydraulikpumpe 14 durch eine zweite Hydraulikleitungsstrecke 30 verbunden.

Die erste Hydraulikleitungsstrecke 28 ist mit einem Hydraulikflüssigkeitstank 32, welcher in Figur 1 lediglich schematisch und ohne die darin enthaltene Hydraulikflüssigkeit dargestellt ist, über eine Hydraulikflüssigkeitsentnahmestrecke 34 verbunden. Ebenso ist die zweite Hydraulikleitungsstrecke 30 mit dem Hydraulikflüssigkeitstank 32 über eine zweite Hydraulikflüssigkeitsentnahmestrecke 36 verbunden. In den Hydraulikflüssigkeitsentnahmestrecken 34 und 36 sind jeweils ein Saugventil 38 bzw. 40 in der Form eines Rückschlagventils derart vorgesehen, dass Hydraulikflüssigkeit lediglich vom Tank 32 zu den Hydraulikleitungsstrecken 28 und 30 fließen kann, von diesen über die Strecken 34 und 36 jedoch nicht in den Tank 32.

In der ersten Hydraulikleitungsstrecke 28 ist nahe des ersten Wirkbereichs 24 des Aktuators 12 ein erstes Lasthalteventil 42 vorgesehen. Ebenso ist in der zweiten Hydraulikleitungsstrecke 30 nahe des zweiten Wirkbereichs 26 ein zweites Lasthalteventil 44 gleicher Bauart vorgesehen. Aufgrund der gleichen Bauart der beiden Lasthalteventile 42 und 44 wird lediglich das erste Lasthalteventil 42 näher erläutert werden. Das zweite Lasthalteventil 44 funktioniert entsprechend. Gleiche Funktionsteile des zweiten Lasthalteventils 44 sind mit gleichen Bezugszeichen bezeichnet, lediglich erhöht um die Ziffer 2.

Das erste Lasthalteventil 42 ist in Figur 1 in seiner Normalstellung dargestellt, in welcher es eine Hydraulikflüssigkeitsströmung in den ersten Wirkbereich 24 gestattet, eine Strömung aus dem ersten Wirkbereich 24 hinaus jedoch sperrt. Dies ist in dem in Figur 1 gezeigten Beispiel durch ein federvorgespanntes Rückschlagventil 42a erreicht. In einer weniger bevorzugten Ausführungsform kann auch ein einfaches Rückschlagventil ohne Federvorspannung vorgesehen sein. Eine zweite Durchlassstrecke 42b kann gegen die Vorspannkraft einer Feder 42c in den Leitungsstrang der ersten Hydraulikleitungsstrecke 28 eingestellt werden, sodass Hydraulikflüssigkeit sowohl in den ersten Wirkbereich 24 einströmen sowie auch aus diesem ausströmen kann.

Zur Verstellung des ersten Lasthalteventils 42 von der dargestellten Normalstellung in die Lastabbaustellung, in welcher die Durchlassstrecke 42b aktiv ist, ist eine Steuerleitung 42d vorgesehen, welche das erste Lasthalteventil 42 entgegen der Kraft der Feder 42c mit dem Druck der Hydraulikflüssigkeit in der zweiten Hydraulikleitungsstrecke 30 beaufschlagt. Genauer wird das erste Lasthalteventil 42 mit dem Druck beaufschlagt, welcher in Strömungsrichtung auf den zweiten Wirkbereich 26 zu vor dem zweiten Lasthalteventil 44 in der zweiten Hydraulikleitungsstrecke 30 herrscht. Dies hat den Vorteil, dass man mit einer schwächeren Feder 42c auskommt, da die Abschnitte vor den Lasthalteventilen druckentspannt werden können, während der Druck in dem zwischen den Lasthalteventilen 42 und 44 und dem Aktuator 12 liegenden Streckenabschnitten gerade auf hohem Pegel gehalten werden soll.

Steigt nun der Druck in der zweiten Hydraulikleitungsstrecke 30 an, weil die Pumpe 14 Hydraulikflüssigkeit in den zweiten Wirkbereich 26 pumpt, um den Kolben 22 in Figur 1 nach links zu verschieben, so steigt auch der Steuerdruck in der Steuerleitung 42d, sodass das erste Lasthalteventil 42 gegen die Kraft der Feder 42c nach links in die Lastabbaustellung verschoben wird. Dann kann Hydraulikflüssigkeit durch das erste Lasthalteventil 42 aus dem ersten Wirkbereich 24 hinausströmen, sodass eine Verlagerung des Kolbens 22 möglich wird.

In Strömungsrichtung vom Aktuator 12 weg sind auf die Lasthalteventile 42 und 44 folgend in der ersten Hydraulikleitungsstrecke 28 eine erste Gegendruckventilanordnung 46 und in der zweiten Hydraulikleitungsstrecke 30 eine zweite Gegendruckventilanordnung 48 vorgesehen. Die erste 46 und die zweite Gegendruckventilanordnung 48 sind baugleich, weshalb im Weiteren lediglich die erste Gegendruckventilanordnung 46 beschrieben wird. Gleiche Funktionselemente wie in der ersten Gegendruckventilanordnung 46 sind in der zweiten Gegendruckventilanordnung 48 mit gleichen Bezugszeichen versehen, jedoch erhöht um die Zahl 2.

Die Gegendruckventilanordnung 46 umfasst ein in der ersten Hydraulikleitungsstrecke 28 vorgesehenes Rückschlagventil 46a, welches derart vorgesehen ist, dass es eine Hydraulikflüssigkeitsströmung zum Aktuator 12 hin gestattet, von diesem weg jedoch sperrt.

Ein Zuschaltventil 46b ist in einem zum Rückschlagventil 46a, welches auch federvorbelastet sein kann, parallelen Leitungsstrang 46c angeordnet. Über eine Steuerleitung 46d wird der in der ersten Hydraulikleitungsstrecke 28 in Strömungsrichtung zum Aktuator 12 hin hinter dem Rückschlagventil 46a herrschende Druck als Steuerdruck auf das Zuschaltventil 46b ausgeübt.

Das Zuschaltventil 46b ist durch ein Federmittel 46e mit einstellbarer Kraft in eine Nicht-Durchlassstellung vorgespannt. In einer weniger bevorzugten Ausführungsform kann das Federmittel 46e auch nicht einstellbar sein und eine fest vorbestimmte Kraft liefern.

Dann, wenn der Steuerdruck in der Steuerleitung 46d so groß wird, dass die von ihm auf das Zuschaltventil 46b ausgeübte Kraft größer wird als die vom Federmittel 46e ausgeübte Schließkraft wird das Zuschaltventil 46b in eine Durchlassstellung verstellt, sodass Hydraulikflüssigkeit vom ersten Wirkbereich 24 unter Umgehung des Rückschlagventils 46a in Richtung zum Hydraulikflüssigkeitstank 32 strömen kann. Durch Vorsehen der Gegendruckventilanordnungen 46 und 48 wird sichergestellt, dass Hydraulikflüssigkeit aus den Wirkbereichen 24 und 26 nur unter Sicherstellung eines durch die Federmittel 46e und 48e bestimmten Mindestgegendrucks abfließen kann. Dies verkürzt die zum Einregeln des Kolbens 22 in eine gewünschte Stellung benötigte Regelzeit, weil es ein Überschwingen des Kolbens über die gewünschte Sollstellung hinaus erschwert oder gar verhindert.

In der ersten Hydraulikleitungsstrecke 28 ist der Hydraulikpumpe 14 nächstliegend eine erste Druckbegrenzungseinrichtung 50 vorgesehen. Ebenso ist in der zweiten Hydraulikleitungsstrecke 30 der Hydraulikpumpe 14 nächstliegend eine zweite Druckbegrenzungseinrichtung 52 vorgesehen. Die erste 50 und die zweite Druckbegrenzungseinrichtung 52 sind baugleich, weshalb im Weiteren lediglich die erste Druckbegrenzungseinrichtung 50 beschrieben werden wird. Gleiche Funktionseinheiten der zweiten Druckbegrenzungseinrichtung 52 sind mit gleichen Bezugszeichen versehen wie jene der ersten Druckbegrenzungsvorrichtung 50, jedoch erhöht um die Zahl 2.

Die erste Druckbegrenzungseinrichtung 50 umfasst ein Zuschaltventil 52a, wie es bereits in den Gegendruckventilanordnungen 46 und 48 verwendet ist. Das Zuschaltventil 52a ist in einem Leitungsstrang 52b angeordnet, welcher die erste 28 mit der zweiten Hydraulikleitungsstrecke 30 verbindet. Das Zuschaltventil 50a ist durch ein Federmittel 50c in eine Nicht-Durchlassstellung vorgespannt. Eine Steuerleitung 50d führt den in der ersten Hydraulikleitungsstrecke 28 herrschenden Hydraulikflüssigkeitsdruck dem Zuschaltventil 50a derart zu, dass er in Richtung einer Verstellung des Zuschaltventils 50a in die Durchlassstellung wirkt. Das Federmittel 50c kann auch mit einer fest gewählten Gegenkraft, d.h. nicht einstellbar, gewählt sein.

Die auf das Zuschaltventil 50a vom Federmittel 50c ausgeübte Vorspannkraft in die Nicht-Durchlassstellung sollte so groß gewählt sein, dass bei normalem Betrieb der Stelleinrichtung 10 üblicherweise in der ersten Hydraulikleitungsstrecke 28 auftretenden Drücken keine Verstellung des Zuschaltventils 50a in die Durchlassstellung erfolgt. Sollte jedoch aus irgend einem Grunde, etwa durch eine Verklemmung des Aktuators 12 oder eine Behinderung des Kolbens 22, bei einer gewünschten Verstellung desselben der Druck in der ersten Hydraulikleitungsstrecke 28 über einen durch das Federmittel 50c bestimmten Grenzdruck hinaus ansteigen, wirkt dieser Druck über die Steuerleitung 50d derart auf das Zuschaltventil 50a, dass dieses in die Durchlassstellung verstellt wird und somit einen hydraulischen Kurzschluss zwischen der ersten und der zweiten Hydraulikleitungsstrecke 28 bzw. 30 herstellt. Dann wird Hydraulikflüssigkeit lediglich im Kreis umgepumpt, sodass ein weiterer Druckanstieg verhindert wird.

Wenn der Aktuator 12 nach einer Verstellung des Kolbens 22 durch die Lasthalteventile 42 und 44 in seiner erreichten Stellung eingespannt ist, wird die Hydraulikpumpe 14 üblicherweise abgeschaltet. Zur Erhöhung der Standzeit der zwischen Hydraulikpumpe 14 und den Lasthalteventilen 42 und 44 liegenden Hydraulikleitungsabschnitte sind gleichartige Entlastungsleitungen 56 und 58 vorgesehen. Die die erste Hydraulikleitungsstrecke 28 mit dem Hydraulikflüssigkeitstank 32 verbindende erste Entlastungsleitung 56 gestattet über ein Drosselventil 60 einen allmählichen Abbau des Drucks in dem Abschnitt der ersten Hydraulikleitungsstrecke 28, welcher zwischen dem ersten Lasthalteventil 42 und der Druckmittelpumpe 14 liegt. Ebenso gestattet die zweite Entlastungsleitung 58 einen allmählichen Druckabbau in dem entsprechenden Abschnitt der zweiten Hydraulikleitungsstrecke 30 über das Drosselventil 62.

Der Aufbau der vorliegenden Stelleinrichtung kann noch dadurch vereinfacht werden, dass die Entlastungsleitungen 56 und 58 als Umgehungsleitungen zu den Saugventilen 38 bzw. 40 ausgebildet sind und die Drosselventile 60 und 62 den Saugventilen 38 bzw. 40 unmittelbar parallel schalten, wie dies bei den Gegendruckventilanordnungen 46 und 48 des gezeigten Beispiels der Fall ist.

Der in Figur 1 gezeigte Aktuator 12 kann Teil einer Lenkvorrichtung oder einer Lasthebe- und -senkvorrichtung sein. Er kann darüber hinaus auch zur Verstellung weiterer Elemente in zwei im Wesentlichen entgegengesetzte Richtungen, auch Drehrichtungen, verwendet sein.

In Figur 1 ist ebenfalls eine Regeleinrichtung 70 dargestellt, welche über eine strichpunktiert eingezeichnete Steuerleitung 72 den Elektromotor 16 ansteuern kann. Die Steuerleitung 72 überträgt dabei Ein- und Ausschalt-Befehle sowie Befehle hinsichtlich der Drehzahl und der Drehrichtung des Elektromotors 16, wobei die Kopplung von Motor 16 und Hydraulikpumpe 14 derart ist, dass die von der Hydraulikpumpe 14 pro Zeiteinheit geförderte Menge an Hydraulikflüssigkeit zur Drehzahl des Motors 16 proportional ist und dass weiter die Förderrichtung der Hydraulikpumpe 14 von der Drehrichtung des Motors 16 abhängig ist.

Über eine Informationsleitung 74 erhält die Regeleinrichtung 70 Informationen von einem Sensor 76 über die momentane Stellung des Kolbens 22 des Aktuators 12. Über eine weitere Informationsleitung 76, welche in Figur 1 lediglich angedeutet ist, erhält die Regeleinrichtung Informationen von einer in Figur 1 symbolisch dargestellten Eingabevorrichtung 78. Aus den Informationen der Eingabevorrichtung 78 ermittelt die Regeleinrichtung 70 eine Sollstellung des Kolbens 22 und vergleicht diese mit der vom Sensor 76 erhaltenen Iststellung. Abhängig von einem Vergleich von Soll- und Iststellung wird der Motor 16 über die Steuerleitung 72 von der Regeleinrichtung 70 derart angetrieben, dass sich der Kolben 22 ausgehend von der Iststellung in Richtung zur Sollstellung bewegt. Der Antrieb wird solange aufrecht erhalten, bis der Kolben 22, gegebenenfalls im Rahmen einer vorgegebenen Toleranz, sich in der ermittelten Sollstellung befindet.

## Patentansprüche

1. Druckmittelbetätigte Stelleinrichtung, insbesondere für eine Fahrzeuglenkvorrichtung, umfassend einen doppeltwirkenden Aktuator (12) mit zwei im Wesentlichen entgegengesetzt wirkenden Wirkbereichen (24, 26), wobei an jeden Wirkbereich (24, 26) je eine Druckmittelleitungsstrecke (28, 30) angeschlossen ist, durch welche den Wirkbereichen (24, 26) ein Druckmittel zuführbar beziehungsweise aus diesen (24, 26) abführbar ist, und wobei jede dem Aktuator (12) Druckmittel zuführende Druckmittelleitungsstrecke (28, 30) mit einer Druckmittelpumpe (14) verbunden ist, welche mit einem Pumpenantrieb (16) gekoppelt ist, durch den die wenigstens eine Druckmittelpumpe (14) zur Förderung von Druckmittel antreibbar ist,
**dadurch gekennzeichnet, dass** der Pumpenantrieb (16) derart ausgebildet ist, dass die Menge des von der Druckmittelpumpe (14) pro Zeiteinheit geförderten Druckmittels veränderbar und seine Förderrichtung (I, II) umkehrbar ist.

2. Druckmittelbetätigte Stelleinrichtung nach Anspruch 1,
**dadurch gekennzeichnet, dass** die Druckmittelpumpe (14) eine rotierende Pumpe (14) ist und dass der Pumpenantrieb (16) ein drehzahlveränderlicher und drehrichtungsumkehrbarer Drehantrieb (16), vorzugsweise Elektromotor (16), ist.

3. Druckmittelbetätigte Stelleinrichtung nach Anspruch 1 oder 2,
**dadurch gekennzeichnet, dass** sie genau eine Druckmittelpumpe (14) umfasst, welche zur Förderung von Druckmittel in zwei Richtungen (I, II) ausgebildet ist, wobei die Druckmittelpumpe (14) über eine erste Druckmittelleitungsstrecke (28) mit einem ersten Wirkbereich (24) des Aktuators (12) und über eine zweite Druckmittelleitungsstrecke (30) mit einem zweiten Wirkbereich (26) des Aktuators (12) verbunden ist.

4. Druckmittelbetätigte Stelleinrichtung nach einem der vorhergehenden Ansprüche,
**dadurch gekennzeichnet, dass** eine mit dem Aktuator (12) in Druckmittelübertragungsverbindung stehende Druckmittelleitungsanordnung (18), vorzugsweise jeweils die erste (28) und die zweite Druckmittelleitungsstrecke (30), über wenigstens eine Druckmittelentnahmestrecke (34, 36) mit einem Druckmittelreservoir (32) verbunden ist, insbesondere unter Zwischenanordnung wenigstens eines Saugventils (38, 40), vorzugsweise eines Saugventils (38, 40) in jeder Druckmittelentnahmestrecke (34, 36), welches Saugventil (38, 40) eine Druckmittelströmung aus dem Druckmittelreservoir (32) gestattet und eine Druckmittelströmung in das Druckmittelreservoir (32) sperrt.

5. Druckmittelbetätigte Stelleinrichtung nach einem der vorhergehenden Ansprüche,
**dadurch gekennzeichnet, dass** der Pumpenantrieb (16) oder/und die Druckmittelpumpe (14) mit einer selbsteinfallenden Bremse oder mit einer in eine Bremsstellung vorgespannten Antriebsbremse versehen ist.

6. Druckmittelbetätigte Stelleinrichtung nach Anspruch 3, gegebenenfalls unter Einbeziehung des Anspruchs 4 oder 5,
**dadurch gekennzeichnet, dass** die erste (28) und die zweite Druckmittelleitungsstrecke (30) sowohl zur Druckmittelzufuhr zum als auch zur Druckmittelabfuhr vom Aktuator (12) ausgebildet sind.

7. Druckmittelbetätigte Stelleinrichtung nach Anspruch 6,
**dadurch gekennzeichnet, dass** in einer, vorzugsweise in jeder Druckmittelleitungsstrecke (28, 30) zwischen der Druckmittelpumpe (14) und dem zugeordneten Wirkbereich (24, 26) des Aktuators (12) ein Lasthalteventil (42, 44) vorgesehenen ist, welches schaltbar ist zwischen einer Normalstellung (bei 42a, 44a), in der es eine Druckmittelströmung in Richtung zum Aktuator (12) gestattet und in der entgegengesetzten Richtung sperrt, und einer Lastabbaustellung (bei 42b, 44b), in der es eine Druckmittelströmung in Richtung vom Aktuator (12) weg gestattet, wobei das Lasthalteventil (42, 44) vorzugsweise in die Normalstellung (bei 42a, 44a) vorgespannt ist.

8. Druckmittelbetätigte Stelleinrichtung nach Anspruch 7,
**dadurch gekennzeichnet, dass** in jeder Druckmittelleitungsstrecke (28, 30) je ein Lasthalteventil (42, 44) derart vorgesehen ist, dass die Verstellung des einen Lasthalteventils (42 oder 44) von der Normalstellung in die Lastabbaustellung in Abhängigkeit von einem Druck des Druckmittels erfolgt, welcher in der Druckmittelleitungsstrecke (30 oder 28) mit dem jeweils anderen Lasthalteventil (44 oder 42) herrscht, vorzugsweise welcher in Strömungsrichtung zum Aktuator (12) hin vor dem jeweils anderen Lasthalteventil (44 oder 42) herrscht.

9. Druckmittelbetätigte Stelleinrichtung nach einem der vorhergehenden Ansprüche,
**dadurch gekennzeichnet, dass** in einer, vorzugsweise in jeder zur Abfuhr von Druckmittel aus einem Wirkbereich (24, 26) des Aktuators (12) ausgebildeten Druckmittelleitungsstrecke (28, 30) eine Gegendruckventilanordnung (46, 48) vorgesehenen ist, welche eine Druckmittelströmung in Richtung vom Aktuator (12) weg bis zu einem vorbestimmten Freigabedruck des Druckmittels sperrt und bei einem diesen übersteigenden Druck des Druckmittels eine Druckmittelströmung in Richtung vom Aktuator (12) weg gestattet.

10. Druckmittelbetätigte Stelleinrichtung nach Anspruch 9 unter Einbeziehung des Anspruchs 6,
**dadurch gekennzeichnet, dass** die Gegendruckventilanordnung (46, 48) eine Druckmittelströmung in Richtung zum Aktuator (12) gestattet und eine Druckmittelströmung in Richtung vom Aktuator (12) weg bis zu dem vorbestimmten Freigabedruck des Druckmittels sperrt.

11. Druckmittelbetätigte Stelleinrichtung nach Anspruch 10,
**dadurch gekennzeichnet, dass** die Gegendruckventilanordnung (46, 48) ein Rückschlagventil (46a, 48a) und ein parallel dazu geschaltetes Zuschaltventil (46b, 48b), vorzugsweise mit einstellbarer Gegenkraft, umfasst.

12. Druckmittelbetätigte Stelleinrichtung nach einem der vorhergehenden Ansprüche,
**dadurch gekennzeichnet, dass** wenigstens ein Druckbegrenzungsventil (50, 52) vorgesehen ist, welches dazu ausgebildet ist, den Druck in einer ihm zugeordneten Druckmittelleitungsstrecke (28, 30), vorzugsweise in jeder Druckmittelleitungsstrecke (28, 30), auf einen vorbestimmten Druckmittel-Grenzdruck zu begrenzen.

13. Druckmittelbetätigte Stelleinrichtung nach Anspruch 12,
**dadurch gekennzeichnet, dass** das wenigstens eine Druckbegrenzungsventil (50, 52) eine Druckmittelströmung von der ihm zugeordneten Druckmittelleitungsstrecke (28, 30) weg dann gestattet, wenn der Druck des Druckmittels in dieser Druckmittelleitungsstrecke (28, 30) den vorbestimmten Druckmittel-Grenzdruck übersteigt.

14. Druckmittelbetätigte Stelleinrichtung nach Anspruch 13,
**dadurch gekennzeichnet, dass** das wenigstens eine Druckbegrenzungsventil (50, 52) in einer die erste (28) und die zweite Druckmittelleitungsstrecke (30) verbindenden Druckmittelverbindungsleitung (50b, 52b) angeordnet ist.

15. Druckmittelbetätigte Stelleinrichtung nach Anspruch 13 oder 14,
**dadurch gekennzeichnet, dass** je ein der ersten (28) und ein der zweiten Druckmittelleitungsstrecke (30) zugeordnetes Druckbegrenzungsventil (50, 52) vorgesehen ist, wobei jedes Druckbegrenzungsventil (50, 52) eine Druckmittelströmung von der einen Druckmittelleitungsstrecke (28, 30) weg zur jeweils anderen Druckmittelleitungsstrecke (28, 30) dann gestattet, wenn der Druck des Druckmittels in der jeweiligen Druckmittelleitungsstrecke (28 oder 30) den vorbestimmten Druckmittel-Grenzdruck übersteigt.

16. Druckmittelbetätigte Stelleinrichtung nach einem der Ansprüche 12 bis 15,
**dadurch gekennzeichnet, dass** das wenigstens eine Druckbegrenzungsventil (50, 52) ein Zuschaltventil (50a, 52a), vorzugsweise mit einstellbarer Gegenkraft, umfasst.

17. Druckmittelbetätigte Stelleinrichtung nach einem der vorhergehenden Ansprüche,
**dadurch gekennzeichnet, dass** wenigstens eine Druckmittelleitungsstrecke (28, 30), vorzugsweise alle Druckmittelleitungsstrecken (28, 30), über eine Drossel (60, 62) mit einem Druckmittelreservoir (32) verbunden ist.

18. Druckmittelbetätigte Stelleinrichtung nach einem der vorhergehenden Ansprüche,
**dadurch gekennzeichnet, dass** der Aktuator (12) ein Kolben-Zylinder-System (12) ist.

19. Druckmittelbetätigte Stelleinrichtung nach einem der Ansprüche 1 bis 17,
**dadurch gekennzeichnet, dass** der Aktuator ein zur Drehbewegung antreibbarer Aktuator ist.

20. Lenkvorrichtung mit einer um eine Lenkachse schwenkbaren Radaufnahme, mit einer eine Lenkkraft zur Radaufnahme übertragenden Kraftübertragungseinrichtung und mit einer Stelleinrichtung (10) gemäß einem der vorhergehenden Ansprüche, wobei die Kraftübertragungseinrichtung eine vom Aktuator (12) der Stelleinrichtung (10) ausgegebene Kraft zur Radaufnahme überträgt, um diese um die Lenkachse zu verschwenken.

21. Flurförderfahrzeug, insbesondere Stapler, mit wenigstens einer Stelleinrichtung gemäß einem der Ansprüche 1 bis 19.

22. Flurförderfahrzeug nach Anspruch 21,
**dadurch gekennzeichnet, dass** es eine Lenkvorrichtung gemäß Anspruch 20 umfasst.

23. Flurförderfahrzeug nach Anspruch 22,
**dadurch gekennzeichnet, dass** es eine Lenkregelvorrichtung (70) umfasst, welche mit wenigstens einem Lenkwinkelsensor (76) wenigstens eine Größe erfasst, die die momentane Lenkwinkelstellung wenigstens eines lenkbaren Rads repräsentiert, welche weiter mit wenigstens einem Lenkmittelsensor wenigstens eine Lenkgröße erfasst, die eine Betätigung eines Lenkmittels (78), etwa eines Lenkrads, repräsentiert, welche ferner ausgehend von der erfassten Lenkgröße eine Lenksollgröße ermittelt, die eine gewünschte Lenkwinkelstellung des wenigstens einen lenkbaren Rades repräsentiert, und welche schließlich den Pumpenantrieb (16) derart ansteuert, dass das wenigstens eine lenkbare Rad ausgehend von seiner momentanen Lenkwinkelstellung in Richtung zu der gewünschten Lenkwinkelstellung verschwenkt wird.
